# FASCICULE DE BREVET EUROPEEN

(11) **EP 3 421 298 B1**
(45) Date de publication et mention de la délivrance du brevet: **04.12.2019**
(21) Numéro de dépôt: 18180736.3
(22) Date de dépôt: 29.06.2018
(51) Int. Cl.: B60R 13/00, B60R 13/02, F16B 5/12

(54) **ÉLÉMENT DE DÉCOR**
DEKORELEMENT
DECOR ELEMENT

(30) Priorité: 30.06.2017 FR 1756095
(43) Date de publication de la demande: 02.01.2019
(73) Titulaire: Faurecia Intérieur Industrie, 92000 Nanterre (FR)
(72) Inventeur: PONTHIEU, Didier, 60480 LA NEUVILLE SAINT PIERRE (FR); LE BORGNE, Olivier, 60650 SAINT PAUL (FR)
(74) Mandataire: Lavoix

(56) Documents cités:
- EP-A1- 2 292 476
- EP-A1- 2 832 591
- CN-A- 105 109 445
- US-A1- 2014 210 191

## Description

La présente invention se rapporte à un élément de décor du type de ceux montés par exemple dans un véhicule automobile.

EP 2 832 591 A1 divulgue un élément de décor selon le préambule de la revendincation 1.

Il est connu d'utiliser un tel élément de décor typiquement à des fins esthétiques pour enjoliver une paroi intérieure (habitacle, malle, etc.) ou extérieure (carrosserie). Un tel élément de décor figure par exemple une marque, nom ou logo, du constructeur, un modèle, nom ou logo, de véhicule ou est simplement décoratif. Il peut prendre une forme quelconque, réduite telle un rond ou un rectangle ou plus allongée telle une baguette. Des effets de matière peuvent encore être réalisés avec un décor d'aspect métallique, cuir, bois précieux, etc. Des effets de finition matte ou brillante peuvent encore être employés. Ces effets peuvent être assortis ou au contraire contrastés avec la matière et les effets de la paroi support.

Le problème adressé par la présente est la fixation d'un tel élément de décor sur une paroi. Il est connu pour fixer un élément de décor sur une paroi, de percer au moins un trou traversant dans ladite paroi. Un élément de décor comprend une partie esthétique qui reste apparente et visible, que l'on nomme décor. Ce décor est conformé pour être disposé sensiblement parallèlement contre une surface extérieure de la paroi. Un élément de décor comprend encore un plongeur comprenant au plus autant d'extensions que de trous ménagés dans la paroi. Chaque extension est disposée sensiblement perpendiculaire au décor et en regard d'un trou afin d'être apte à traverser la paroi en étant engagée dans le trou. Une extension est solidaire du décor par son extrémité proximale. Ainsi une fixation d'une extension à la paroi assure une fixation de l'élément de décor à la paroi.

Il est connu au moins deux méthodes pour réaliser une telle fixation. Une première méthode, appelée boutrellage, consiste à réaliser, par ultrasons, une soudure au niveau d'une extension. Une telle méthode présente les inconvénients de nécessiter un outillage important et de ne pas pouvoir être appliquée à un élément de décor comprenant un chromage, la soudure ayant tendance à endommager l'aspect de ces chromages. Une autre méthode consiste à coiffer, du côté de la surface de la paroi opposée à la surface de la paroi où s'appuie le décor, l'extrémité d'une extension engagée et dépassant d'un trou au moyen d'une rondelle agrippante. Une telle rondelle comprend typiquement, sur son diamètre intérieur, des pointes centripètes, apte à engager l'extrémité de l'extension de manière à empêcher son retrait. Une telle méthode présente l'inconvénient que le serrage obtenu et donc la tenue de la fixation dépend de l'opérateur qui la réalise.

Aussi il est recherché une méthode alternative qui permette de réaliser une fixation d'un élément de décor sensiblement indémontable et ne présentant pas les inconvénients des méthodes de l'art antérieur.

L'invention a pour objet un élément de décor, apte à être fixé sur une paroi percée d'au moins un trou traversant, comprenant un décor apte à être disposé sensiblement parallèlement contre une surface extérieure de la paroi, un plongeur comprenant au plus autant d'extensions sensiblement perpendiculaires au décor que de trous, une extension étant apte à traverser la paroi au niveau d'un trou et étant solidaire du décor par son extrémité proximale, où une extension est percée d'une lumière traversante à son extrémité distale, la lumière étant disposée de manière à affleurer à une surface intérieure de la paroi lorsque le décor est disposé contre la surface extérieure de la paroi, et une broche comprenant au moins un ergot et au plus autant d'ergots que de lumières, un ergot étant apte à être inséré dans une lumière de manière à s'opposer à un retrait du plongeur, un ergot comprenant un moyen de verrouillage, tel un creux, apte à coopérer avec un moyen de verrouillage complémentaire, telle une protubérance, solidaire de la surface intérieure afin d'immobiliser l'ergot relativement à la paroi.

Selon une autre caractéristique, un ergot est apte à être inséré selon un déplacement sensiblement parallèle à la paroi.

Selon une autre caractéristique, un ergot comprend encore une butée apte à venir abuter contre la lumière de telle manière à empêcher que l'ergot ne traverse la lumière.

Selon une autre caractéristique, les moyens de verrouillage sont conformés pour autoriser le mouvement d'un ergot lors de son insertion dans la lumière et interdire le mouvement opposé, préférentiellement dès que l'éventuelle butée est abutée contre la lumière.

Selon une autre caractéristique, lesdits au moins un ergot, préférentiellement tous les ergots, sont solidaires.

Selon une autre caractéristique, la broche comprend au moins une bordure, s'étendant sensiblement perpendiculairement à la broche, de manière à réaliser un premier détrompeur n'autorisant qu'une unique face la broche à pouvoir venir en contact avec la surface intérieure lors de l'insertion.

Selon une autre caractéristique, la broche comprend au moins deux ergots présentant des largeurs différentes entre elles et au moins deux lumières associées présentent des largeurs complémentaires des largeurs desdits au moins deux ergots de manière à réaliser un deuxième détrompeur n'autorisant qu'un unique sens d'insertion desdits au moins deux ergots.

D'autres caractéristiques, détails et avantages de l'invention ressortiront plus clairement de la description détaillée donnée ci-après à titre indicatif en relation avec des dessins sur lesquels :
- la figure 1 montre un mode de réalisation en vue coupée de profil d'un élément de décor avant sa mise en place et sa fixation à une paroi percée,
- la figure 2 montre le même mode de réalisation que la figure 1 en vue coupée de profil, l'élément de décor étant en place, une broche s'apprêtant à être insérée pour réaliser une fixation,
- la figure 3 montre le même mode de réalisation que la figure 1 en vue coupée de profil, la broche étant partiellement insérée,
- la figure 4 montre le même mode de réalisation que la figure 1 en vue coupée de profil, la broche étant totalement insérée et verrouillée,
- la figure 5 montre un autre mode de réalisation en vue coupée de dessous d'un élément de décor fixé à une paroi,
- la figure 6 montre un autre mode de réalisation en vue coupée de profil d'un élément de décor fixé à une paroi rigide.

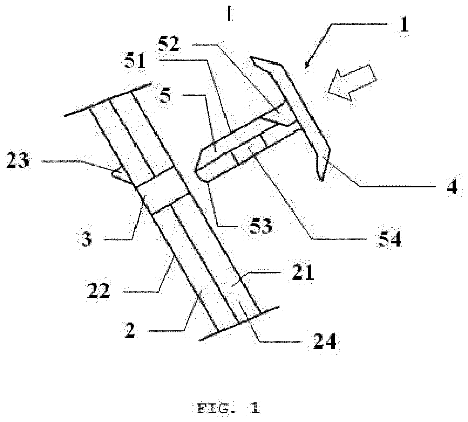

Tel que plus particulièrement visible à la figure 1, un élément de décor 1 selon l'invention est apte à être fixé sur une paroi 2. Pour cela la paroi 2 est percée d'au moins un trou 3 traversant. L'élément de décor 1 comprend un décor 4, un plongeur 5 et une broche 6. Le décor 4 est la partie esthétique de l'élément de décor 1. Sa face externe est celle, décorative, qui reste visible lorsque l'élément de décor 1 est en place et fixé. Sa face interne est celle qui fait face à la face externe 21 de la paroi 2 lorsque l'élément de décor 1 est en place et fixé. Ainsi le décor 4, lorsque l'élément de décor 1 est en place et fixé, est disposé sensiblement parallèle à la paroi 2 contre sa surface extérieure 21. Le plongeur 5 comprend au moins une extension 51. Chaque extension 51 présente une section transversale lui permettant d'être insérée dans un trou 3. La longueur d'une extension 51 est telle que l'extension 51 traverse la paroi 2 et que son extrémité distale 53 dépasse hors de la paroi 2. Le plongeur 5 comprend au plus autant d'extensions 51 que la paroi 2 comprend de trous 3. Chaque extension 51 est disposée en regard d'un trou 3. Une extension 51 est sensiblement perpendiculaire au décor 4 et est solidaire du décor 4 par son extrémité proximale 52. Ainsi une fixation à la paroi 2 du plongeur 5, par une fixation d'au moins une des extensions 51, permet de fixer le décor 4 à la paroi 2.

Selon une caractéristique de l'invention, une extension 51 est percée d'une lumière 54 traversante à son extrémité distale 53. Une broche 6 comprenant au moins un ergot 61 apte à être inséré dans une lumière 54 permet, lorsqu' l'ergot 61 est inséré dans la lumière 54, de s'opposer au retrait du plongeur 5 hors du trou 3 et de la paroi 2. La broche 6 comprend au moins un tel ergot 61 et au plus autant d'ergots 61 que de lumières 54, soit au plus autant d'ergots 61 que d'extensions 51. La taille et la forme d'une lumière 54 est sensiblement identique par dimensions légèrement supérieures à celle d'un ergot 61 associé, afin de permettre l'insertion de l'ergot 61 associé dans la lumière 54 associée.

Afin de garantir la fixation de l'élément de décor 1 sur la paroi 2 de manière sensiblement indémontable, un ergot 61 comprend encore un moyen de verrouillage 64, tel un creux, apte à coopérer avec un moyen de verrouillage complémentaire 23, telle une protubérance, solidaire de la surface intérieure 22. On entend ici par indémontable un assemblage qui ne peut se démonter de lui-même et notamment sous les contraintes de vibrations et de chocs auquel est soumis un dispositif disposé dans un véhicule automobile, y compris lors d'un crash, afin qu'un élément de décor ne risque pas de voler dans le véhicule. Ceci n'exclut cependant pas une possibilité de démontage, par exemple au moyen d'un outil adapté ou selon une procédure adaptée, ne pouvant se réaliser spontanément. Avantageusement, le verrouillage se réalise de manière automatique lorsque l'ergot 61 est inséré dans la lumière 54. Selon un mode de réalisation possible, tel qu'illustré aux figures 1-4, l'extrémité de l'ergot 61 qui dépasse de la lumière 54 après insertion comprend un moyen de verrouillage 64, par exemple sous forme d'un creux 64. En regard de ce creux 64, la surface intérieure 22 de la paroi 2 comprend un moyen de verrouillage complémentaire, par exemple sous forme d'une protubérance 23, de forme adaptée à pouvoir se loger dans le creux 64. Ainsi l'ergot 61 se trouve immobilisé relativement à la paroi 2. Ici, le verrouillage automatique est obtenu au moyen d'un plan incliné présent sur le moyen de verrouillage 23 de tel manière à permettre une introduction aisée de l'ergot 61 jusqu'au-delà d'une introduction du moyen de verrouillage 64 dans la protubérance 23. Au contraire un plan vertical sur le moyen de verrouillage 23 retient ensuite le creux 64 inséré dans la protubérance 23 en empêchant son retrait. Selon un mode de réalisation alternatif le moyen de verrouillage 64 comprend une protubérance tandis que le moyen de verrouillage 23 complémentaire comprend un creux complémentaire.

Selon une autre caractéristique avantageuse, la lumière 54 est disposée de manière à affleurer à la surface intérieure 22 de la paroi 2 lorsque le décor 4 est disposé contre la surface extérieure 21 de la paroi 2. Ceci signifie que, lorsque l'élément de décor 1 est en place, lorsque la/les extension(s) 51 du plongeur 5 est/sont engagée(s) au travers de la paroi 2 via le/les trous 3 et que le décor 4 est disposé contre la surface extérieure 21 de la paroi 2, la dimension apparente de la lumière 54 est identique à la dimension correspondante de l'ergot 61 venant s'insérer dans la lumière 54. La dimension totale de la lumière 54 peut être légèrement plus grande, le surplus restant masqué par l'épaisseur de la paroi 2. La dimension apparente ou totale de la lumière 54 s'entend dans le sens de la plongée. Ceci permet une insertion en force de l'ergot 61, le cas échéant en jouant sur l'élasticité, dans le sens de la plongée, des différents composants. Ainsi l'élément de décor 1 est fixé à la paroi avantageusement sans jeu, l'élasticité contrainte assurant une fonction de rattrapage de jeu.

Selon une autre caractéristique, une fenêtre 54 et un ergot 61 associés sont avantageusement conformés pour que l'ergot 61 s'insère dans ladite lumière 54 selon un déplacement sensiblement parallèle à la surface intérieure 22 de la paroi 2.

Afin de simplifier les opérations de montage et éviter tout risque d'erreur de la part de l'opérateur, plusieurs dispositions et détrompages sont avantageusement mis en œuvre.

Selon une première telle disposition, un ergot 61 comprend une butée 65 apte à venir abuter contre la lumière 54. Ainsi l'insertion de l'ergot 61 est limitée par la butée 65 et l'ergot 61 ne peut traverser la lumière 54. La mise en place de l'ergot 61 est facilitée en ce qu'il peut avantageusement être inséré dans la lumière 54 jusqu'à venir en butée. Selon un mode de réalisation, l'ergot 61 présente une largeur sensiblement constante dans la partie où il doit être inséré, et cette largeur présente un décroché s'accompagnant d'une nette augmentation formant la butée 65. Selon un mode de réalisation préférentiel, la broche 6 forme un peigne dont les ergots 61 sont les dents. Le corps du peigne forme alors la/les butées 65.

Selon une autre caractéristique, les moyens de verrouillage 64, 23 complémentaires disposés respectivement sur un ergot 61 et sur la surface intérieure 22 sont avantageusement conformés pour autoriser le mouvement de l'ergot 61 lors de son insertion dans la lumière 54 mais interdire le mouvement opposé. Ceci est par exemple réalisé, dans le mode de réalisation illustré, par un plan incliné sur le moyen 23 qui permet à l'extrémité de l'ergot 61 de s'insérer et de dépasser le moyen 23 et par un plan sensiblement perpendiculaire venant engager une surface complémentaire sensiblement parallèle sur le moyen 64, et empêchant ainsi son retrait. Les deux moyens de verrouillage 64, 23 sont avantageusement disposés l'un par rapport à l'autre de telle manière à ce que leur verrouillage mutuel se réalise lorsque la butée 65, si elle est présente, est abutée contre la lumière 54, où peu avant qu'elle ne le soit. Ainsi l'ergot 61 est immobilisé, avantageusement entre la butée 65 et le verrouillage des moyens de verrouillage 64, 23, et avantageusement sans jeu.

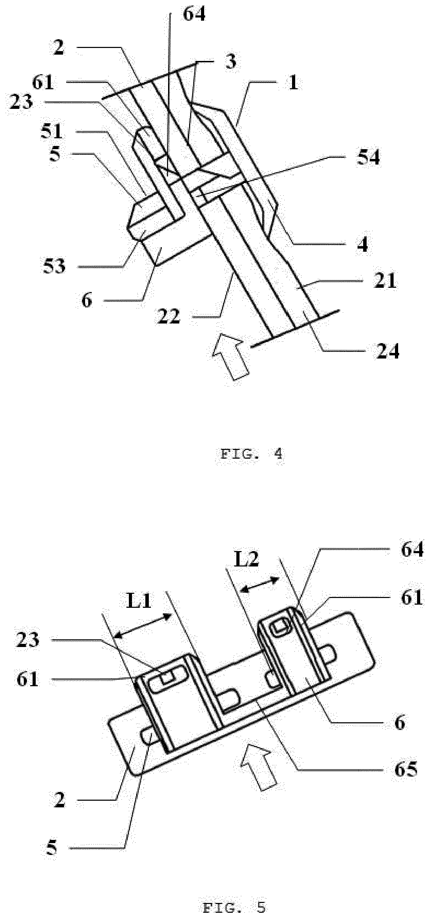

Selon un mode de réalisation préférentiel, la broche 6 comprend au moins deux ergots 61 et tout ou partie de ces ergots 61 sont solidaires. Ceci est par exemple le cas du mode de réalisation illustré, particulièrement à la figure 5, où la broche 6 forme un peigne dont les ergots 61 sont les dents. Ceci permet avantageusement de réduire le nombre de pièces et donc le nombre de manipulations lors de la fixation de l'élément de décor 1.

Afin de simplifier les opérations de montage et éviter tout risque d'erreur de la part de l'opérateur, un premier détrompage est avantageusement mis en œuvre.

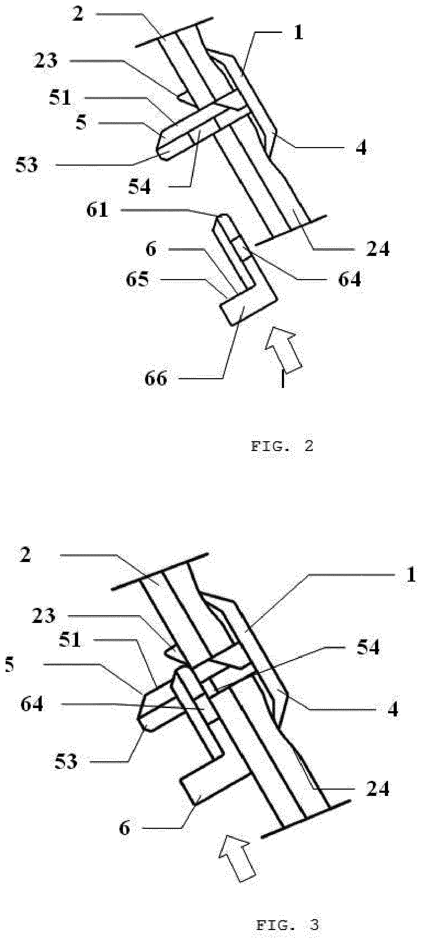

Selon cette caractéristique, plus particulièrement visible aux figures 2-4, la broche 6 comprend au moins une bordure 66. Cette bordure 66, s'étend sensiblement perpendiculairement à la broche 6 en s'éloignant de la paroi 2. Ainsi cette bordure 66 empêche une des faces, la face externe, de la broche 6 de venir en contact avec la surface intérieure 22 lors de l'insertion de la broche 6 ou empêche l'insertion. Ceci réalise avantageusement un premier détrompeur empêchant une inversion dessus-dessous de la broche 6.

Pour les mêmes raisons, dans le cas d'une broche 6 comprenant au moins deux ergots 61, ces au moins deux ergots 61 sont dimensionnés de manière à présenter des largeurs L1, L2, différentes entre elles et les au moins deux lumières 54 associées sont dimensionnés de manière à présenter des largeurs complémentaires des largeurs desdits au moins deux ergots 6. Ceci est plus particulièrement illustré à la figure 5. Ainsi ces dispositions assurent qu'un ergot 61 ne peut être inséré que dans sa lumière 54 associée. Avec des largeurs identiques entre les ergots 61, il serait possible de réaliser l'insertion de la broche 6 depuis le « bas » tel qu'illustré à la figure 5, mais encore depuis le « haut » en croisant les ergots 61 et les lumières 54. Aussi ces dispositions de largeurs L1, L2 différentes permettent de réaliser un deuxième détrompeur n'autorisant qu'un unique sens d'insertion desdits au moins deux ergots 61. Cette caractéristique technique décrite avec des largeurs différentes est généralisable à des sections des ergots différentes entre elles.

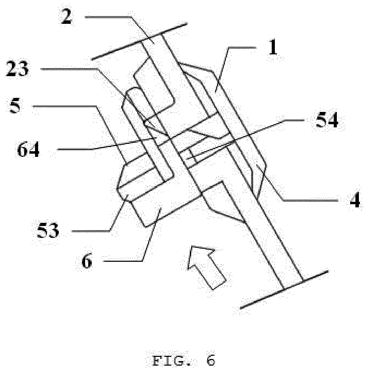

Tel qu'illustré à la figure 6, l'invention est applicable à une paroi 2 simple, pouvant être rigide. Il convient dans ce cas de dimensionner la dimension apparente de la lumière 54 avec précision afin d'obtenir une fixation sans jeu. Il a été vu qu'une élasticité était avantageuse pour réaliser un montage sans jeu. Toutes les pièces sont avantageusement en matière plastique et une telle élasticité peut être obtenue de différentes manière. Selon une manière le décor 4 présentent des ailettes qui par leur souplesse permettent d'obtenir cette élasticité.

Avantageusement, et tel qu'illustré aux figures 1-4, la paroi 2 comprend différentes couches 2, 24. Selon un mode de réalisation avantageux, l'une des couches 2, 24, préférentiellement la couche externe 24, est une couche souple et élastique, en ce qu'elle comprend sur une partie au moins de son épaisseur une mousse, un textile, un cuir ou équivalent. Cette couche 24 peut présenter une épaisseur quelconque. Avantageusement cette (partie de) couche est compressible et de manière sensiblement élastique, fournissant l'élasticité souhaitée dans le sens de la plongée. Aussi lors de la mise en place de l'élément de décor 1, le décor 4 est appuyé contre la paroi 2, 24, en la comprimant, au-delà de sa position finale de manière à ce que la/les lumière(s) 54 apparaisse(nt) du côté de la surface intérieure 22 de la paroi 2. La broche 6 et le/les ergot(s) 61 sont alors insérés sans difficulté. L'appui sur le décor 4 est alors relâché. Sous l'effet de l'élasticité de la paroi 2, principalement conférée par la couche 24, le décor 4 est repoussé. Ceci assure un maintien de la broche 6 et une fixation sans jeu de l'élément de décor 1.

## Revendications

1. Elément de décor (1), apte à être fixé sur une paroi (2) percée d'au moins un trou (3) traversant, comprenant un décor (4) apte à être disposé sensiblement parallèlement contre une surface extérieure (21) de la paroi (2), un plongeur (5) comprenant au plus autant d'extensions (51) sensiblement perpendiculaires au décor (4) que de trous (3), une extension (51) étant apte à traverser la paroi (2) au niveau d'un trou (3) et étant solidaire du décor (4) par son extrémité proximale (52), une extension (51) étant percée d'une lumière (54) traversante à son extrémité distale (53), la lumière (54) étant disposée de manière à affleurer à une surface intérieure (22) de la paroi (2) lorsque le décor (4) est disposé contre la surface extérieure (21) de la paroi (2), et une broche (6) comprenant au moins un ergot (61) et au plus autant d'ergots (61) que de lumières (54), un ergot (61) étant apte à être inséré dans une lumière (54) de manière à s'opposer à un retrait du plongeur (5), un ergot (61) comprenant un moyen de verrouillage (64),
**caractérisé en ce que** le moyen de verrouillage (64), tel un creux, est apte à coopérer avec un moyen de verrouillage complémentaire (23), telle une protubérance, solidaire de la surface intérieure (22) afin d'immobiliser l'ergot (61) relativement à la paroi (2).

2. Elément de décor (1) selon la revendication 1, où un ergot (61) est apte à être inséré selon un déplacement sensiblement parallèle à la paroi (2).

3. Elément de décor (1) selon l'une quelconque des revendications 1 ou 2, où un ergot (61) comprend encore une butée (65) apte à venir abuter contre la lumière (54) de telle manière à empêcher que l'ergot (61) ne traverse la lumière (54).

4. Elément de décor (1) selon l'une quelconque des revendications 1 à 3, où les moyens de verrouillage (64,23) sont conformés pour autoriser le mouvement d'un ergot (61) lors de son insertion dans la lumière (54) et interdire le mouvement opposé, préférentiellement dès que l'éventuelle butée (65) est abutée contre la lumière (54).

5. Elément de décor (1) selon l'une quelconque des revendications 1 à 4, où lesdits au moins un ergot (61), préférentiellement tous les ergots (61), sont solidaires.

6. Elément de décor (1) selon l'une quelconque des revendications 1 à 5, où la broche (6) comprend au moins une bordure (66), s'étendant sensiblement perpendiculairement à la broche (6), de manière à réaliser un premier détrompeur n'autorisant qu'une unique face la broche (6) à pouvoir venir en contact avec la surface intérieure (22) lors de l'insertion.

7. Elément de décor (1) selon l'une quelconque des revendications 1 à 6, où la broche (6) comprend au moins deux ergots (61) présentant des largeurs différentes entre elles et au moins deux lumières (54) associées présentent des largeurs complémentaires des largeurs desdits au moins deux ergots (61) de manière à réaliser un deuxième détrompeur n'autorisant qu'un unique sens d'insertion desdits au moins deux ergots (61).

## Patentansprüche

1. Dekorelement (1), das imstande ist, an einer Wand (2) fixiert zu werden, die von wenigstens einem Durchgangs-Loch (3) durchdrungen ist, aufweisend ein Dekor (4), das imstande ist, im Wesentlichen parallel gegen eine äußere Fläche (21) der Wand (2) angeordnet zu sein, einen Eintauchteil (5), der höchstens so viele Erstreckungsteile (51) im Wesentlichen senkrecht zum Dekor (4) hat, wie es Löcher (3) gibt, wobei ein Erstreckungsteil (51) imstande ist, die Wand (2) zu durchdringen auf Höhe eines Lochs (3), und über sein proximales Ende fest mit dem Dekor (4) verbunden ist, wobei ein Erstreckungsteil (51) an seinem distalen Ende (53) von einem Durchgangs-Kanal (54) durchdrungen ist, wobei der Kanal (54) in einer Weise angeordnet ist, dass er an einer Innenfläche (22) der Wand (2) zum Vorschein kommt, wenn das Dekor (4) gegen die Außenfläche (21) der Wand (2) angeordnet ist, und einen Stift (6), der wenigstens einen Zeh (61) und höchstens so viele Zehen (61) hat, wie es Kanäle (54) gibt, wobei ein Zeh (61) imstande ist, derart in einen Kanal (54) eingesetzt zu sein, dass er einem Rück-Austritt des Eintauchteils (5) entgegenwirkt, wobei ein Zeh (61) ein Verriegelungsmittel (64) aufweist,
**dadurch gekennzeichnet, dass** das Verriegelungsmittel (64), so wie ein Hohlraum, imstande ist, mit einem komplementären Verriegelungsmittel (23), so wie einem Vorsprung, das fest mit der Innenfläche (22) verbunden ist, zu kooperieren, um den Zeh (61) relativ zu der Wand (2) festzulegen.

2. Dekorelement (1) gemäß Anspruch 1, wobei ein Zeh (61) imstande ist, entlang einer Verlagerung im Wesentlichen parallel zu der Wand (2) eingesetzt zu werden.

3. Dekorelement (1) gemäß irgendeinem der Ansprüche 1 oder 2, wobei ein Zeh (61) auch einen Anschlag (65) aufweist, der imstande ist, gegen den Kanal (54) anzuschlagen, um zu verhindern, dass der Zeh (61) den Kanal (54) durchschreitet.

4. Dekorelement (1) gemäß irgendeinem der Ansprüche 1 bis 3, wobei die Verriegelungsmittel (64, 23) angepasst sind zum Erlauben der Bewegung eines Zehs (61) während dessen Einsetzens in den Kanal (54) und Unterbinden der entgegengesetzten Bewegung, bevorzugt sobald der etwaige Anschlag (65) gegen den Kanal (54) angeschlagen ist.

5. Dekorelement (1) gemäß irgendeinem der Ansprüche 1 bis 4, wobei der besagte wenigstens eine Zeh (61), bevorzugt alle Zehen (61), fest verbunden sind.

6. Dekorelement (1) gemäß irgendeinem der Ansprüche 1 bis 5, wobei der Stift (6) wenigstens einen Rand (66) hat, der sich im Wesentlichen senkrecht zu dem Stift (6) erstreckt, um eine erste Unverwechselbarkeitseinrichtung zu realisieren, die nur einer einzigen Seite des Stifts (6) erlaubt, auf dessen Einsetzen in Kontakt mit der Innenfläche (22) zu kommen.

7. Dekorelement (1) gemäß irgendeinem der Ansprüche 1 bis 6, wobei der Stift (6) wenigstens zwei Zehen (61) aufweist, die zueinander unterschiedliche Breiten haben, wobei wenigstens zwei zugeordnete Kanäle (54) Weiten haben, die zu den Breiten der besagten wenigstens zwei Zehen (61) komplementär sind, um eine zweite Unverwechselbarkeitseinrichtung zu realisieren, die nur eine einige Einsetzrichtung der besagten wenigstens zwei Zehen (61) erlaubt.

## Claims

1. Decorative element (1), capable of being fixed to a wall (2) drilled with at least one through-hole (3), comprising a decoration (4) capable of being arranged substantially in parallel against an outer surface (21) of the wall (2), a protrusion (5) comprising at most as many extensions (51) substantially perpendicular to the decoration (4) as there are holes (3), an extension (51) being capable of passing through the wall (2) at a hole (3) and being joined to the decoration (4) by its proximal end (52), an extension (51) being drilled with a through-opening (54) at its distal end (53), the opening (54) being arranged so as to be flush with an inner surface (22) of the wall (2) when the decoration (4) is arranged against the outer surface (21) of the wall (2), and a pin (6) comprising at least one lug (61) and at most as many lugs (61) as there are openings (54), a lug (61) being capable of being inserted into an opening (54) so as to prevent the protrusion (5) from being pulled out, a lug (61) comprising a locking means (64),
**characterised in that** the locking means (64), such as a recess, is capable of cooperating with a complementary locking means (23), such as a protuberance, which is joined to the inner surface (22), in order to immobilise the lug (61) relative to the wall (2).

2. Decorative element (1) according to claim 1, wherein a lug (61) is capable of being inserted by a displacement substantially parallel to the wall (2).

3. Decorative element (1) according to either claim 1 or claim 2, wherein a lug (61) further comprises a stop (65) capable of coming into abutment against the opening (54) so as to prevent the lug (61) from passing through the opening (54).

4. Decorative element (1) according to any one of claims 1 to 3, wherein the locking means (64, 23) are shaped to allow the movement of a lug (61) when it is being inserted into the opening (54) and to prevent the opposite movement, preferably as soon as the optional stop (65) is in abutment against the opening (54).

5. Decorative element (1) according to any one of claims 1 to 4, wherein said at least one lug (61), preferably all the lugs (61), are joined.

6. Decorative element (1) according to any one of claims 1 to 5, wherein the pin (6) comprises at least one edge (66) which extends substantially perpendicular to the pin (6) so as to form a first foolproofing device which allows only one face of the pin (6) to be able to come into contact with the inner surface (22) during insertion.

7. Decorative element (1) according to any one of claims 1 to 6, wherein the pin (6) comprises at least two lugs (61) having different widths and at least two associated openings (54) having widths complementary to the widths of said at least two lugs (61) so as to form a second foolproofing device which allows said at least two lugs (61) to be inserted in only one direction.
